# EUROPEAN PATENT APPLICATION

(11) **EP 0 555 936 A1**
(43) Date of publication of application: **18.08.1993**
(21) Application number: 93200401.3
(22) Date of filing: 12.02.1993
(51) Int. Cl.: B01D 53/36, B01J 23/74

(54) **Process for the reduction of nitrogen oxides to nitrogen**

(30) Priority: 14.02.1992 NL 9200281
(71) Applicant: GASTEC N.V., NL-7327 AC Apeldoorn (NL)
(72) Inventor: der Kinderen, Joannes Maria, NL-7391 SJ Twello (NL)
(74) Representative: Smulders, Theodorus A.H.J., Ir.

(57) **Abstract**

The invention relates to a process for the reduction of nitrogen oxides in the spent gas of a combustion engine, that contains at least 0.5 vol.% water, utilizing a catalyst comprising a support on which a nickel-containing catalytically active material has been provided, wherein during the reduction the nickel present is maintained in the zero-valent state by the presence of an excess of reducing agent.

## Description

The invention relates to a process for the reduction of nitrogen oxides present in the spent gas of a combustion engine to molecular nitrogen, utilizing a catalyst, this catalyst comprising a support with a nickel-containing catalytically active material provided thereon.

It is well known that the phenomenon of "acid rain" is caused by pollutions, such as SO₂ and NOₓ, released into the atmosphere. The combat of "acid rain" accordingly includes the improvement of flue gas purification and adaptation of combustion processes in order to reduce emissions of these pollutions.

Flue gas mixtures to be purified typically contain a nitrogen oxide (NOₓ) content of 100-3000 ppm and a residual amount of oxygen. On account of this oxygen excess, in most cases selective catalytic reduction of NOₓ to nitrogen is employed. However, if the combustion process can be controlled so that no excess oxygen is present in the flue gas, non-selective catalytic reduction of NOₓ is possible.

A great deal of research is being done on the development of catalyst systems with which, through non-selective reduction, the NOₓ emission of gas or petrol engines can be reduced drastically. In addition to NOₓ, other reducible constituents of the gas to be treated, which generally contains rather much water as well, are also converted. The research involves the development of an exhaust-gas gas purification system based on the reduction of nitrogen oxides with the aid of reducing compounds present in the spent gas, such as CO and hydrocarbons.

A known exhaust-gas catalyst that operates according to this principle is the three-way catalyst. This catalyst removes CO, higher hydrocarbons and NOₓ from the exhaust gas by oxidizing CO and higher hydrocarbons to CO₂ and H₂O and reducing NOₓ to N₂.

However, a prerequisite of this system is that the ratio air oxygen/fuel (expressed as lambda (λ)) must be precisely stoichiometric, in which case λ is 1. If λ > 1, there is an excess of oxygen, whilst, if λ < 1, the combustible mixture contains an excess of fuel. For setting and maintaining this stoichiometric composition, a so-called lambda probe is used.

A drawback to this is that the control system connected to this probe is rather expensive and delicate. Moreover, the ash output of the engine is not optimal with this feed composition (λ = 1), while continuous operation with this fuel composition reduces the lifetime of the engine.

Moreover, a three-way catalyst has the important disadvantage that it is nearly always based on the very costly rhodium, because otherwise NH₃ formation arises.

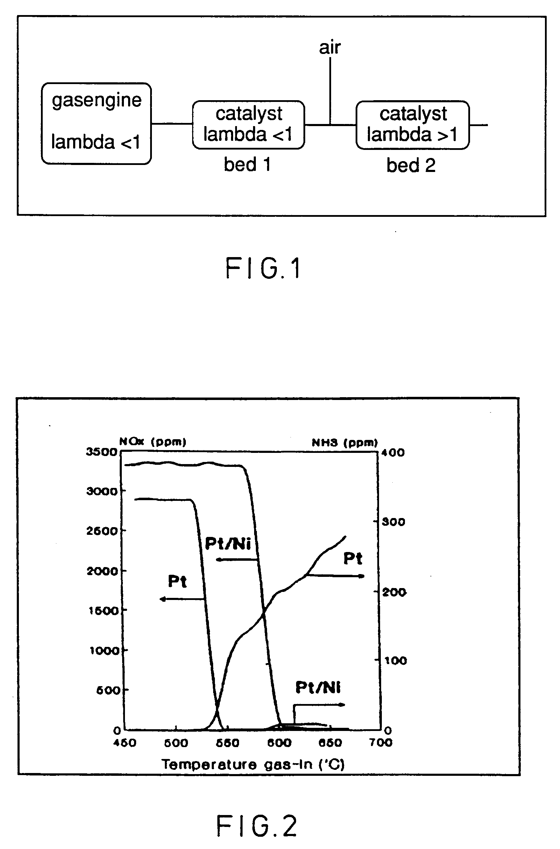

Another catalytic method for the removal of NOₓ from exhaust gases is the dual bed system (see Fig. 1). In this method, the combustion engine works with an excess of fuel (λ < 1). The exhaust gas flows through two catalyst beds. In the first bed NOₓ is reduced to N₂ and in the second bed CO and the incompletely burnt hydrocarbons that may be present are oxidized to CO₂ and H₂O after addition of oxygen (for instance as air).

This system, however, is not much used in practice because in the first bed, with the reduction catalysts conventionally used therein, NOₓ is often reduced to NH₃. The ammonia so formed is subsequently oxidized to NOₓ again in the second bed. Thus, the final efficiency of the NOₓ reduction is adversely affected and the emission of NOₓ is not prevented.

Moreover, if the second bed does not function properly, NH₃ will be formed and emitted.

If λ < 1, the ash output of a combustion engine is not optimal and the lifetime of the engine is shortened.

A third system with which nitrogen oxides can be removed from spent gases is described in O.J. Adlhart et al., "Processing Nitric Acid Tail Gas", Chem. Eng. Progress, February 1971. This concerns the purification of the spent gas of nitric acid plants, where the heat released in the reaction of the oxygen in the spent gas with the reducing agent is utilized for generating steam.

In that system, a noble metal-containing catalyst is used. Before the spent gas is passed over this catalyst, the gas must be preheated and mixed with methane.

In the presence of the catalyst, the following reactions take place:

CH₄ + 2 O₂ ----> CO₂ + 2 H₂O (1)

CH₄ + 4 NO₂ ----> 4 NO + CO₂ + 2 H₂O (2)

CH₄ + 4 NO ----> 2 N₂ + CO₂ + 2 H₂O (3)

Since methane reacts faster with molecular oxygen than with nitrogen oxides, the conversion of oxygen (reaction 1) must be complete before the final reduction of NOₓ to N₂ occurs (reactions 2 + 3). For that reason, an excess of methane must always be present.

The purification sytem described hereinabove can also be utilized for the reduction of the NOₓ emission by gas (combustion) engines. Before the flue gas has reached the catalyst, methane (natural gas) is added. An additional advantage is the fact that the gas engine itself can be operated under conditions wherein the mechanical efficiency is maximal, i.e., at a slight excess of air (1.05 < λ < 1.15).

If the combustion engine is deployed in a so-called "Total Energy" system, the heat released during the combustion of the methane can be put to good use.

It is known that supported bimetallic catalysts, in particular Pt-Ni catalysts, give good results in the reduction of nitrogen oxides.

From an article by Richard L. Klimisch and K.C. Taylor, "Ammonia Intermediacy as a Basis for Catalyst Selection for Nitric Oxide Reduction", Environm. Sc. and Technol., vol. 7 (1973), it can be concluded that in the catalytic reduction of nitrogen oxides (present in exhaust gases of gas or petrol engines) ammonia may be formed. When the catalyst used in this reduction contains nickel, the nickel can partly degrade the initially formed ammonia into nitrogen and hydrogen.

It also appears from this article that nickel can degrade ammonia better and at a lower temperature if the catalyst also comprises another metal, viz. copper or a noble metal, such as platinum or palladium.

It is also clear from this article, however, that in all cases where nitrogen oxides are catalytically oxidized, a considerable amount of ammonia is still present in the tail gas.

The object of the invention is to provide a process for the reduction of nitrogen oxides in the spent gas of combustion engines, utilizing a nickel-containing catalyst, without NH₃ being formed.

Surprisingly, it has now been found that the exhaust gas, after passing through the reduction reactor, contains less than 1 ppm ammonia if the nickel in the catalyst is at least partly maintained in the zero-valent state by the presence of an excess of reducing agent.

Accordingly, the present invention relates to a process for reducing nitrogen oxides in the spent gas of a combustion engine, that contains at least 0.5 vol.% water, utilizing a catalyst comprising a support with a nickel-containing catalytically active material provided thereon, wherein during the reduction the nickel present is at least partly maintained in the metallic form.

Surprisingly, in contrast with what is known from the literature, it was found that the presence of a reducing agent, and more particularly hydrogen, in the gas to be reduced stabilizes the metallic nickel and does not lead to the formation of ammonia.

Despite the presence of water in the exhaust gas, it appears to be possible to maintain the nickel in reduced state and at the same time to obtain a good hydrogenation of the nitrogen oxides to form molecular nitrogen. On the ground of what was known about the influence of water on nickel, this was not to be expected. In general, therefore, with the process according to the invention, it appears to be possible to process spent gases containing more than 0.5 vol.% water, and, more particularly, spent gases containing 5 to 20 vol.% water can also be processed.

An important aspect of the invention is formed by the presence of an excess of reducing agent relative to the reducible compounds in the spent gas to be treated. Hydrogen in particular is eligible as a reducing agent, but it is also possible to add an agent that functions as a reducing agent itself or that is converted to hydrogen in the system. A suitable agent for that purpose is for instance methane.

Surprisingly, it was found that, according to the invention, no deactivation or much less deactivation of the catalyst occurs than in the prior art.

The magnitude of the excess of reducing agent to be employed depends on various factors, such as the nature of the spent gas, the degree of its reducibility, and the composition of the catalyst. In general, this excess will be at least 0.05 percent by volume, preferably at least 0.1 percent by volume and more particularly approximately 0.5 percent by volume. An excess of more than 50 percent by volume does not offer any additional advantages. Accordingly, this limit will generally be used as an upper limit.

The content of reducing agent in the spent gas can be set in different ways. A simple way is to feed hydrogen to the spent gas directly from an external source before the spent gas comes into contact with the catalyst. In general, however, this is possible only in the case of stationarily arranged engines in the presence of a hydrogen production unit.

According to a first embodiment of the invention, the hydrogen content in the exhaust gas can be increased by including in the catalyst, in addition to the Ni-containing catalytically active component, a component that catalyzes the (shift) reaction of CO with water to CO₂ and hydrogen. Such components may be based *inter alia* on copper, platinum, palladium, rhodium, nickel, iron and mixtures of two or more of such metals, or mixtures with other components.

According to a second embodiment of the invention, the content of reducing agent (hydrogen) in the spent gas can be increased by including in the Ni-containing catalyst a component that catalyzes the reaction of hydrocarbons with steam to *inter alia* hydrogen (steam-reforming). Such components can be based *inter alia* on platinum, rhodium, palladium, nickel, manganese and molybdenum, mixtures of two or more of such metals, or mixtures with other components.

Because the oxidation of metallic nickel by molecular oxygen occurs faster than the reduction of oxidized nickel, it is advantageous to remove the oxygen present in the exhaust gas prior to the reduction of the nitrogen oxides. This occurs in a preferably performed process according to the invention by passing the exhaust gas, after increasing the content of reducing agent, for instance by formation or addition of a reducing agent, over an oxidation catalyst, whereby the oxygen is removed. Then the exhaust gas is contacted with the reduction catalyst used according to the invention. Preferably, the oxidation catalyst further comprises components that catalytically accelerate the production of hydrogen from carbon monoxide or hydrocarbons.

Such an oxidation catalyst can be a conventional oxidation catalyst, for instance based on a metal or metal oxide from group 1B or 8 of the Periodic Table of the elements. Examples are copper, platinum, palladium, cobalt or chromium and mixtures of two or more of such metals, or mixtures with other components.

The process according to the invention is carried out at increased temperature. Generally, according to the invention, it is not necessary to use temperatures in excess of 700°C, a maximum temperature of 625°C being generally sufficient. Compared with the system disclosed in DE-A-2,225,568, this is a great improvement, since in that system temperatures of 760° prove to be necessary to obtain a good conversion.

The nickel-containing catalyst system used according to the invention is based on nickel and optionally one or more other catalytically active components, as explained hereinabove.

Examples of suitable other components include copper, but also noble metals from group 8 of the Periodic Table, such as platinum, palladium and rhodium. The catalysts are preferably applied to a support, such as a ceramic or metallic support. Suitable support materials are *inter alia* silica and alumina, or sintered metals. In a preferred embodiment of the invention, the catalyst is applied to a "honeycomb", i.e., a honeycomb structure. It is also possible, however, to use the catalyst in the form of at least one catalytic bed of particles.

The catalyst to be used according to the invention can be made in a known manner, for instance by impregnating a support material with a solution of a precursor of the catalytically active component. This operation can optionally be repeated if a catalyst is to be made that contains more than one active component. Impregnation, preferably utilizing the incipient wetness method, is followed by drying, calcination and reduction.

The catalyst to be used comprises 50-99.9 wt.% support material, which may have a surface area of between 5 and 2000 m²/g, measured with N₂ adsorption according to BET, as described in the thesis of drs. I.I.M. Tijburg, Utrecht 1989. Preferably, the support material has a surface area of between 25 and 2000 m²/g. The pore volume, measured with Hg porosimetry, at a pressure of 2000 bar, starting from round pores, is preferably 0.5 to 4 ml/g.

The support material is preferably a transition alumina, more particularly, a γ-alumina, the surface of which may, if so desired, have been stabilized using the method described in US-A 4,968,660, the contents of which are incorporated herein by reference.

The catalytically active material constituting 0.1 to 50 percent by weight of the catalyst comprises 50-100 wt.% nickel. The other component or components that may be present are preferably chosen from copper, manganese, platinum, palladium, rhodium and mixtures of two or more of such metals, or mixtures with other components.

The construction of the catalyst system may be performed in various manners, depending on the nature of the method selected. In the simplest variant, one starts from a single catalyst support, on which a nickel-containing catalyst has been provided. This may be a bed of catalyst particles, but it is also possible to provide the catalyst on a support in honeycomb form. In this method, the reducing agent must be externally added or generated. According to a preferred embodiment of the invention, it is also possible to combine various functions in one catalyst bed by accommodating different catalysts in mutually distinct areas of the catalyst.

According to a first variant, the required excess of hydrogen is generated by conversion of constituents of the spent gas to be purified. This may for instance be done by passing the spent gas, prior to reduction, over a catalyst catalyzing the formation of H₂. This may for instance be a catalyst that catalyzes the reaction of hydrocarbons with water or catalyzes the reaction of CO with water to form CO₂ and H₂. Such catalysts contain at least copper or a noble metal from group 8 of the Periodic Table as active component.

Utilizing the invention, it is possible to reduce NOₓ to molecular nitrogen using methane. As indicated previously, the gas engine can be run under 'lean burn' conditions, which is advantageous from the point of view of efficiency.

According to the invention, it is also possible to use a combustion catalyst that removes oxygen and produces hydrogen. In such a method, the catalyst bed may successively consist of the catalytically active component for the pretreatment, followed by the nickel catalyst. In particular, the catalyst bed of the combustion catalyst may successively consist of a group 8 noble metal or an alloy of a group 8 noble metal with nickel and a nickel catalyst.

The above-mentioned alloy of a group 8 noble metal with nickel can be obtained by adding a solution of the group 8 noble metal in water to the nickel catalyst, so that the group 8 noble metal deposits on the nickel catalyst at the beginning of the catalyst bed of the combustion catalyst.

According to a preferred embodiment of the invention, the combustion catalyst consists of a combination nickel/group 8 noble metal alloy and a nickel catalyst provided on a honeycomb support, the group 8 noble metal nickel alloy having been prepared by treating the honeycomb with nickel catalyst with a solution of the group 8 noble metal in water, for instance by dipping the honeycomb in the solution.

As indicated previously, the process according to the invention can be applied in various manners. The possibilities of application include *inter alia* the use in the purification of exhaust gases of combustion engines in vehicles. It is also possible, however, to use the invention in stationary combustion engines, for example in all kinds of energy and heat generation systems.

The nature of the fuel with which the combustion engine is driven is not critical. It has been found possible to use all kind of fossil fuels, such as natural gas, LPG, petrol, diesel oil, domestic fuel oil, burning oil and products derived therefrom, such as methanol. Optionally, fuels of other origin can be used, such as ethanol.

The present invention will now be illustrated in and by the following non-limiting examples.

### CATALYST PREPARATION

### Method of preparing a La-stabilised γ-Al₂O₃ support.

This example describes the method of preparing a Lanthanum-stabilized γ-Al₂O₃ (Alumina) support. To stabilize 1 kg γ-Alumina with lanthanum, 134.5 g of La(NO₃).6H₂O is dissolved in about 100 ml water. Then 97.5 g EDTA is dissolved in 2.5 liter water. The lantanum nitrate solution is now added in drops to the EDTA solution with stirring. During the addition, care must be taken that the pH does not fall below 4. The pH of the newly prepared La-EDTA solution is adjusted to 5.

In a vessel 1 kg γ-Alumina (250 m²/g) is suspended in 175 liter deionized water with vigorous stirring. By adding 50 vol.% nitric acid, the pH of the suspension is adjusted to 5. The La-EDTA solution is now added to the suspension. During the addition, the pH of the suspension is maintained at 5. After the La-EDTA solution has been added, the suspension must be left to stand for another hour with vigorous stirring. Then the γ-Alumina is filtered off and dried for 12 hours at 60°C. After drying, the stabilized support must be calcined for another 5.5 h at 550°C.

The La charge of the support is now approximately 2.4%.

### METHOD A.

### Preparation Copper catalyst on La-stabilized γ-Alumina.

This example describes the preparation of a copper catalyst by means of homogeneous deposition precipitation. To prepare 1 kg of a 10 wt.% copper on La-stabilized γ-Alumina, 800 g La-stabilized γ-Alumina (ENGELHARD Al 4172p (250 m²/g)) is suspended in 50 liter deionized water. This suspension is heated to 90°C, whereafter the pH of the suspension is adjusted to 3 by means of 50 vol.% HNO₃.

Then 375 g Cu(NO₃)₂.3H₂O and 290 g urea are dissolved in 1.5 liter deionized water.

While the suspension is vigorously stirred, the above-described solution is added to the suspension. Directly after the addition, the pH increases rapidly to about 4. The pH remains at that value for 6 h, whereafter the pH increases rapidly again to 6. At this value, the pH curve exhibits a platform again. Finally, after approx. 12 h from the beginning of the precipitation, the pH increases again to 7.

The suspension is filtered off and dried at 110°C.

In the same manner a 10% copper catalyst on non-stabilized γ-Alumina was prepared as well.

### METHOD B.

### Preparation of a Copper catalyst on γ-Alumina through the injection of lye.

A solution of 375 g Cu(NO₃)₂.3H₂O in 500 ml water is added to a suspension as described in method A. The suspension is vigorously stirred. The pH of the suspension is adjusted to 3 and then a 0.5N lye solution is injected at a rate of 5 ml/min. The pH rises slowly to 6 and then rises rapidly to pH=10.

After filtration of the suspension, the catalyst is dried for 24 h at 110°C.

### METHOD C.

### Preparation of a Nickel catalyst on γ-Alumina.

This example describes the preparation of a nickel catalyst by means of homogeneous deposition precipitation. To prepare 1 kg of a 10 wt.% nickel on γ-Alumina, 800 g γ-Alumina (ENGELHARD Al 4172p) is suspended in 50 liter deionized water. This suspension is heated to 90°C, whereafter the pH of the suspension is adjusted to 3 by means of 50 vol.% HNO₃.

Next, 375 g Ni(NO₃)₂.6H₂O and 290 g urea are dissolved in 1.5 liter deionized water.

While the suspension is vigorously stirred, the above-described solution is added to the suspension. Directly after the addition, the pH increases rapidly to about 5. The pH remains at that value for 12 h. Twelve hours after the beginning of the precipitation, the pH increases again to 7.

The suspension is filtered off and dried at 110°C.

### METHOD D.

### Preparation of a Nickel catalyst on γ-Alumina through the injection of lye.

A solution of 375 g Ni(NO₃)₂.6H₂O in 500 ml water is added to a suspension as described in method C. The suspension is vigorously stirred. The pH of the suspension is adjusted to 3 and then a 0.5N lye solution is injected at a rate of 5 ml/min. The pH rises slowly to 5 and then rises rapidly to pH=10.

After filtration of the suspension, the catalyst is dried for 24 h at 110°C.

### METHOD E.

### Preparation of a platinum on γ-Alumina catalyst through the incipient wetness method.

In accordance with the incipient wetness method, in the preparation of a catalyst, the volume of the active material dissolved in water is equal to the pore volume of the support material to be used. The pore volume of the support material used (ENGELHARD Al 4172p) is 3 ml/gram. For the preparation of 100 gram of a 0.2 wt.% platinum on γ-Alumina catalyst, 2.28 g of a standard tetra-amine platinum solution (Johnson Mattey Chemicals Ltd, 8.77% Pt) is supplemented with 297.72 g water. This solution is stored in the upper vessel. Then 99.8 g support material is put in the lower vessel. To render the pores of the support material properly accessible for the impregnation, the support material is evacuated. After one hour of pumping, the platinum solution is carefully added in drops to the support material under reduced pressure. After impregnation, the catalyst is first dried at 60°C for 24 h and then at 120°C for 24 h.

### METHOD F.

### Preparation of a Platinum/nickel on γ-Alumina catalyst.

For the preparation of 100 g of a 0.2 wt.% platinum/10 wt.% Nickel on γ-Alumina catalyst, 99.8 g Nickel catalyst, prepared according to method C, is impregnated with 300 ml Pt solution according to method E.

### METHOD G.

### Preparation of a Copper/nickel on γ-Alumina catalyst.

The copper/nickel catalysts are prepared by means of homogeneous deposition precipitation. First of all, a nickel on γ-Alumina catalyst is made according to method C. After the precipitation has been ended, the catalyst is filtered off and resuspended, whereafter copper is precipitated homogeneously on the nickel catalyst according to method A.

### EXAMPLES:

### Example I: Pt and Pt/Ni catalysts.

These catalysts were tested for their usability for the non-selective reduction of NOₓ with methane. The intention is to have an engine, the exhaust gas of which is purified, function at an excess of air. The exhaust gas mixture accordingly contains an amount of O₂, in addition to NOₓ. In order to nevertheless obtain a reducing mixture in the catalyst bed, an amount of methane is added to the exhaust gas. The methane is used to reduce both O₂ and NOₓ.

For this purpose, supported noble metal catalysts with either platinum or platinum and nickel as active material were tested. The feed gas consisted of nitrogen with 1.2 vol.% O₂, 2800 ppm NOₓ and 20 vol.% H₂O. This gas mixture was admixed with a maximum amount of 1.0 vol.% of CH₄. The resultant gas mixture was passed over the catalyst, with variation of the temperature of the input gas. The G.H.S.V. was 70,000 h⁻¹. During this experiment, the amount of NO, NO₂ and NH₃ after the catalyst was measured continuously.

In Fig. 2, the behavior of a platinum catalyst is compared with that of a platinum/nickel catalyst. It shows the amount of NOₓ and NH₃ in the gas mixture after the catalyst as a function of the temperature. It appears that over the platinum catalyst at a temperature of 550°C virtually all NOₓ is converted. However, this is accompanied by NH₃ formation and, upon increase of the temperature, the NH₃ content runs up to 300 ppm.

The platinum/nickel catalyst exhibits a lower activity. The NOₓ is only converted at a temperature of 600°C; however, substantially no NH₃ is formed.

### Example II: Cu and Ni catalysts.

These catalyst prove not be suitable for the non-selective reduction of NOₓ with methane. The activity for the reaction of methane with O₂ and NOₓ is too low. The catalysts were also tested for the reduction of NO with CO as reducing agent, the so-called "catalytic dual bed system" and "catalytic three-way system". The gas composition with which the catalysts were tested corresponds with the exhaust gas composition of a gas engine operating at an air/fuel ratio smaller than 1. The input gas mixture consisted of nitrogen with 0.53 vol.% CO, 2200 ppm NOₓ and 15 vol.% H₂O. The G.H.S.V. was 70,000 h⁻¹.

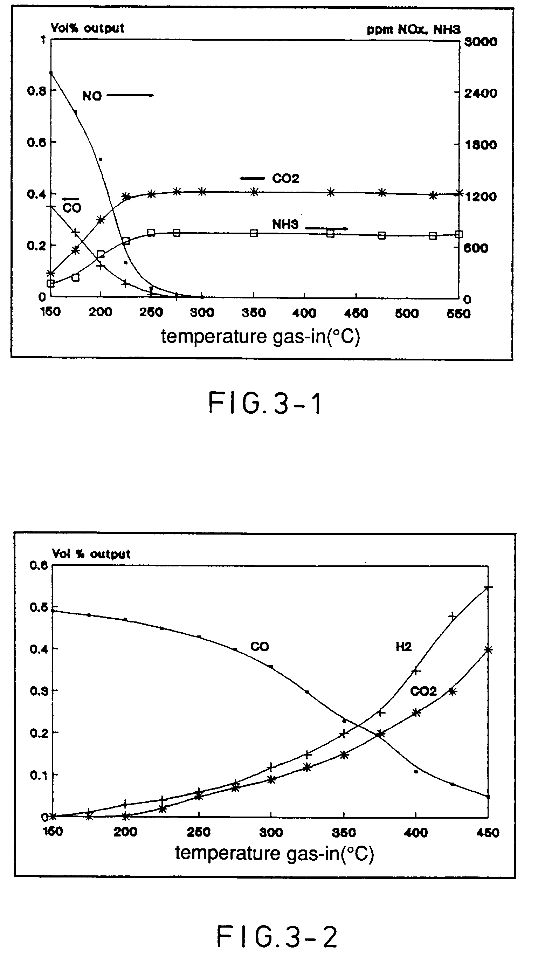

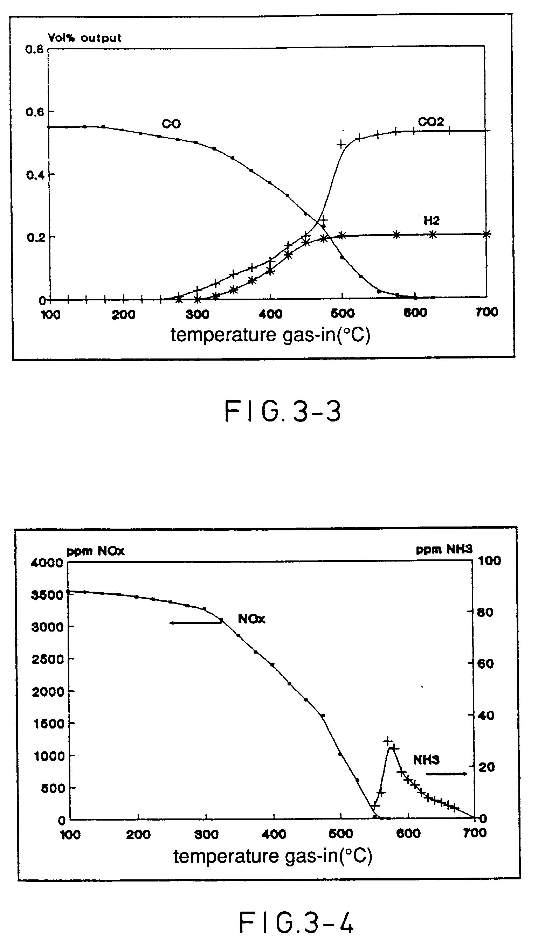

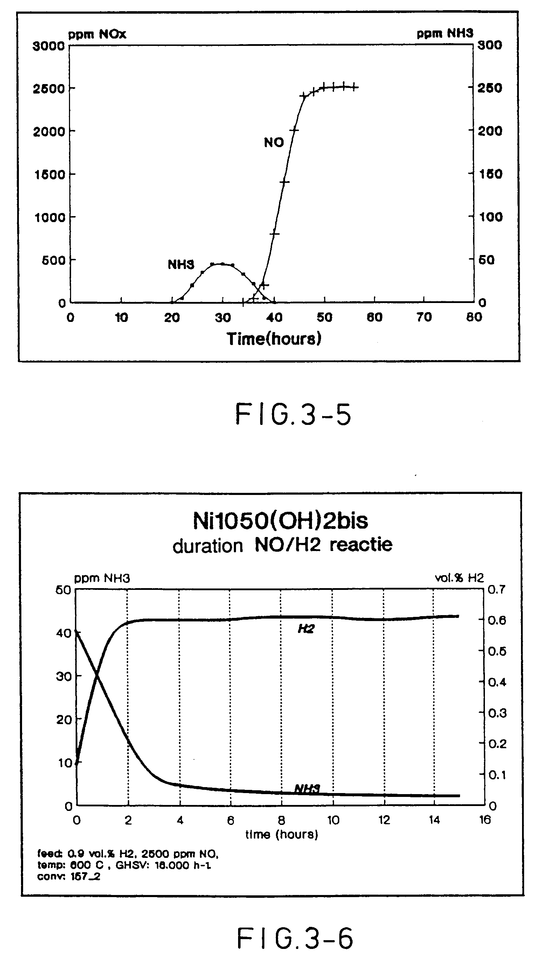

Fig. 3-1 shows the gas composition after the Cu catalyst with increasing temperature. At a temperature of 250°C and above, NOₓ is converted completely. A large part of the NOₓ, however, reacts to form NH₃ (700 ppm) . The formation of ammonia is caused by the reaction of NOₓ with H₂. The hydrogen originates from the reaction of CO with H₂O. The fact is that the Cu catalyst exhibits a high activity for the so-called shift reaction. This is shown in Fig. 3-2.

The nickel catalyst was tested under the same conditions, the difference being that now 3600 ppm NOₓ is present in the feed gas. The behavior of the catalyst is shown in Figs 3-3 and 3-4.

Fig. 3-3 shows the concentrations of CO, CO₂ and H₂ as a function of the temperature. The nickel catalyst also exhibits clear shift activity. The activity is smaller than that of the Cu catalyst. Only at a temperature above 500°C does the CO conversion exceed 90%. From 300° the catalyst produces H₂. The NOₓ reduction and NH₃ production are shown in Fig. 3-4. The activity for the NOₓ reduction is also clearly smaller than that of the Cu catalyst. Complete reduction of NOₓ only occurs at a temperature of 550°C. Here, too, NH₃ production arises (< 30 ppm). The amount of NH₃, however, is much smaller than with the Cu catalyst (700 ppm). If the temperature is now raised to above 600°C, then the NH₃ content decreases to less than 2 ppm. The NH₃ formation is therefore strongly suppressed despite the H₂ production.

The problem of this catalyst is the deactivation, as appears from Fig. 3-5. Deactivation initially leads to the formation of NH₃. This arises after 20 h. Then the production of ammonia decreases slowly, whereafter the conversion of NOₓ decreases rapidly. The deactivation is caused by the oxidation of the nickel to nickel oxide by the water present. If the catalyst is now given a reduction treatment with H₂, so that the nickel oxide is reduced to nickel again, then the deactivation process repeats as shown in Fig. 3-5. Apparently, the gas composition used, with CO as reducing component, is not sufficiently reductive to keep the nickel in the metallic form. To determine this, the CO in the feed gas was replaced by H₂. The result is shown in Fig. 3-6. It is clear to see that the NH₃ production decreases strongly again, despite the presence of H₂ and water. Nor does any more deactivation occur. Accordingly, the hydrogen is capable of keeping the nickel in reduced state, with the result that no NH₃ production occurs.

The prevention of the nickel oxide formation is therefore possible only with hydrogen in the feed gas.

The presence of hydrogen in the gas can be realized in three different ways:
1: Hydrogen production in the combustion process in the engine. This is often insufficient, partly because this hydrogen reacts with the oxygen still present.
2: Catalytic hydrogen production through the "steam-reform" reaction:

   CₓH_{y} + H₂O ---> CO + H₂

   Often, however, there are too few unburnt hydrocarbons present in the exhaust gas mixture. Moreover, it is a troublesome reaction that plays an appreciable role only at temperatures above 550°C.
3: The catalytic hydrogen production by the shift reaction:

   CO + H₂O ---> H₂ + CO₂

   This is easy to realize with the exhaust gas, since there is sufficient CO present.

This last possibility was further elaborated by investigating alloy catalysts based on nickel in combination with copper or platinum, since copper and platinum catalysts are eminent shift catalysts.

### Example III: Cu/Ni alloy catalysts.

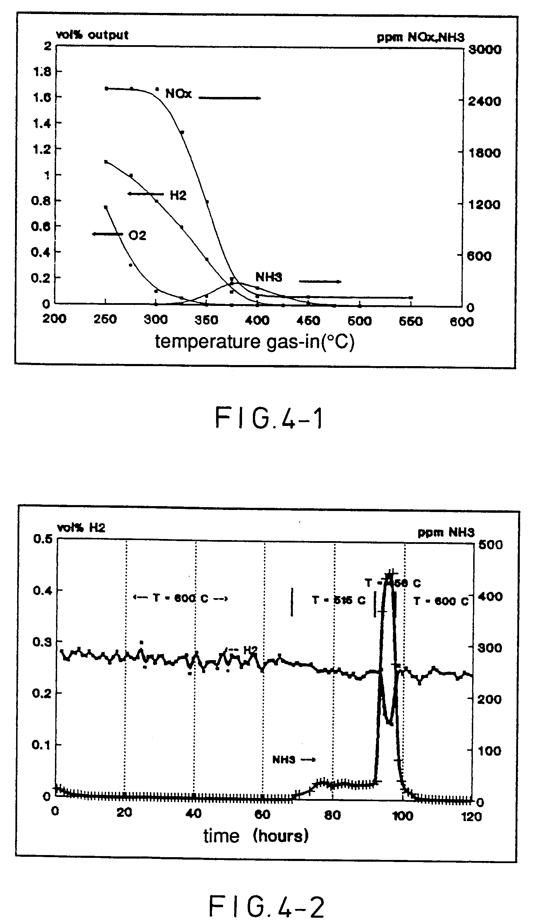

As a first experiment, the formation of NH₃ over the catalyst in the presence of H₂, O₂ and water at different temperatures was investigated. The gas composition consisted of nitrogen with 0.6 vol.% O₂, 1.8 vol.% H₂, 2500 ppm NOₓ and 15 vol.% H₂O. The result is shown in Fig. 4-1. The first reaction that occurs is that of H₂ with O₂. At a temperature of 300°C, all O₂ is converted, whereafter the reaction of NOₓ with H₂ is initiated. This reaction is accompanied by NH₃ formation. The NH₃ formation decreases again at higher temperatures and above 450°C the level falls below 2 ppm. In the case of the pure Cu catalyst (Fig. 4-1), the NH₃ content increased with the temperature to 700 ppm, whereas in the case of the Cu-Ni catalyst, the NH₃ content of the egressing gas mixture falls below 2 ppm. The influence of the nickel is therefore quite clear. To determine whether the catalyst oxidizes slowly, a long-term experiment was carried out. The input gas composition consisted of nitrogen with 0.65 vol.% CO, 2500 ppm NOₓ and 15 vol.% H₂O. The catalyst temperature was 600°C. The result is shown in Fig. 4-2. The CO conversion was 100% and there is evidence of H₂ production. The shift reaction is therefore clearly manifest. At a temperature of 600°C, no NH₃ was measured during the first 60 h. If the temperature is subsequently lowered to 515°C, then 30 ppm NH₃ is produced and this content increases to 450 ppm at a temperature of 450°C. The hydrogen content decreases strongly owing to the reaction of NO to NH₃. If the temperature is raised again to 600°C, then virtually all NH₃ disappears and the hydrogen content regains its original value. This experiment clearly shows that with the present catalyst, the nickel only remains completely reduced through the presence of H₂ at a temperature above 515°C. This hydrogen is formed on the copper through the shift reaction. Thus, at a temperature in excess of 515°C, compared with a nickel catalyst, there is no deactivation as a result of the oxidation of the nickel surface.

### IV: Platinum/nickel alloy catalysts:

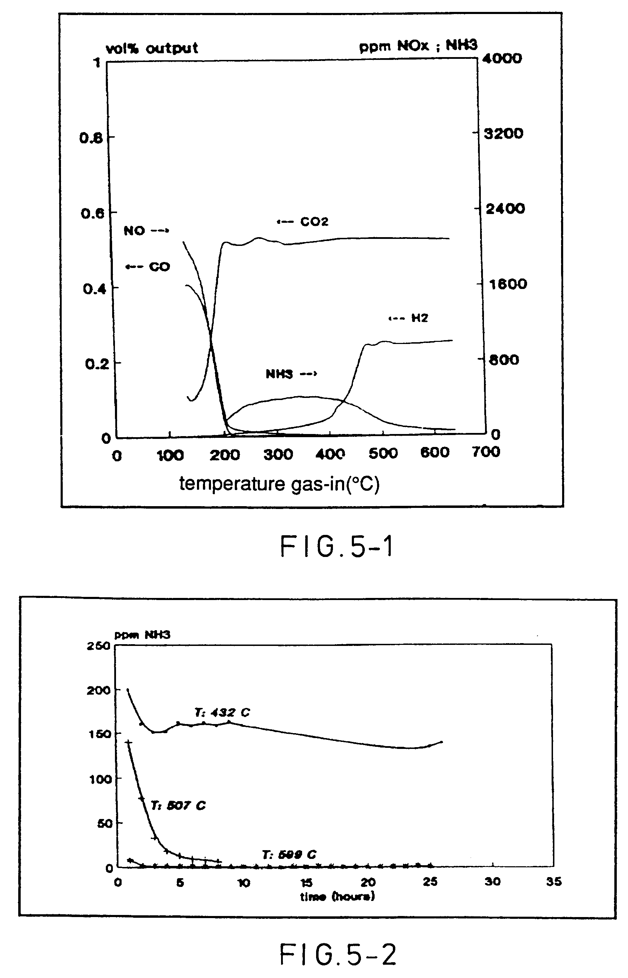

First, the behavior of the catalyst was investigated in the temperature range of 100 to 700°C. The input gas mixture consisted of 0.5 vol.% CO, 2400 ppm NO, 15 vol.% H₂O and, as to the balance, of N₂. The result is shown in Fig. 5-1. This catalyst, too, exhibits a high activity for the NOₓ reduction with CO. Above a temperature of 200°C, all NOₓ is converted. This, however, is again accompanied by NH₃ production. The CO disappears again for a large part via the shift reaction. The hydrogen formed, however, reacts right through to NH₃. Above a temperature of 500°C, the NH₃ disappears and the hydrogen increases again. The behavior is therefore the same as with the copper/nickel alloy catalyst.

The long-term behavior is shown in Fig. 4-2. The catalyst was tested at three temperatures. The starting temperature was 432°C. At this temperature, the catalyst produces 150 ppm NH₃. Upon increase of the temperature to 507°C, the NH₃ content decreases slowly to below 2 ppm. At 600°C, no NH₃ is observed anymore.

Accordingly, under the same conditions, the Cu/Ni and Pt/Ni alloy catalysts exhibit the same behavior. The difference is that the Pt/Ni catalyst exhibits a higher activity. This is reflected by the fact that the catalyst shows virtually no NH₃ at a temperature as low as 500°C and above. In the case of the Cu/Ni catalyst, this only occurs at a temperature above 550°C.

## Claims

1. A process for reducing nitrogen oxides in the spent gas of a combustion engine, that contains at least 0.5 vol.% water, utilizing a catalyst comprising a support on which a nickel-containing catalytically active material has been provided, wherein during the reduction the nickel present is at least partly maintained in the zero-valent state by the presence of an excess of reducing agent.

2. A process according to claim 1, wherein during the reduction the nickel present is at least partly maintained in the zero-valent state by the presence of an excess of hydrogen.

3. A process according to claim 2, wherein, prior to the reduction, hydrogen is added to the spent gas or generated in the spent gas.

4. A process according to claim 3, wherein the required excess of hydrogen is generated by conversion of constituents of the spent gas.

5. A process according to claim 3, wherin the spent gas prior to the reduction is passed over a catalyst that catalyzes the formation of H₂.

6. A process according to claim 5, wherein a catalyst is used that catalyzes the reaction of hydrocarbons with water.

7. A process according to claim 5, wherein a catalyst is used that catalyzes the reaction of CO with water to form CO₂ and H₂.

8. A process according to claim 6 or 7, wherein the catalyst contains at least copper or a noble metal from group 8 of the Periodic Table as active component.

9. A process according to claim 5, wherein a combustion catalyst is used which removes oxygen and produces H₂.

10. A process according to claim 9, wherein the catalyst bed of the combustion catalyst consists, successively, of a group 8 noble metal or an alloy of a group 8 noble metal with nickel and a nickel catalyst.

11. A process according to claim 10, wherein the group 8 noble metal/nickel alloy has been prepared by adding a solution of the group 8 noble metal in water to the nickel catalyst, so that the group 8 noble metal deposits on the nickel catalyst at the beginning of the catalyst bed of the combustion catalyst.

12. A process according to claim 10, wherein the combustion catalyst consists of a combination of nickel/group 8 noble metal alloy and a nickel catalyst provided on a honeycomb support, the group 8 noble metal nickel alloy having been prepared by treating the honeycomb with nickel catalyst with a solution of the group 8 noble metal in water.

13. A process according to claims 1-12, wherein, as reduction catalyst, a catalyst is used that is based on a combination of nickel and a group 8 noble metal, and wherein methane is fed to the spent gas to be treated as a reducing agent.
